# EUROPÄISCHE PATENTANMELDUNG

(11) **EP 0 887 020 A1**
(43) Veröffentlichungstag der Anmeldung: **30.12.1998**
(21) Anmeldenummer: 97110606.7
(22) Anmeldetag: 28.06.1997
(51) Int. Cl.: A23C 9/137, A23L 1/0524

(54) **Milchprodukt und Halbfabrikat zu dessen Herstellung**

(71) Anmelder: Herbstreith & Fox KG Pektinfabrik Neuenbürg, 75305 Neuenbürg/Württ (DE)
(72) Erfinder: Fox, Gerhard F., 75305 Neuenbürg (DE); Endress, Hans-Ulrich, Dr., 75305 Neuenbürg (DE); Veid, Csilla, 76227 Karlsruhe (DE); Dengler, Kai, 75339 Höfen A.D. Enz (DE)
(74) Vertreter: Frank, Gerhard, Dipl.-Phys.

(57) **Zusammenfassung**

Ein Milchprodukt besteht aus einer Mischung eines niederveresterten Pektins mit einem gesäuerten Milcherzeugnis. Der Veresterungsgrad des Pektins ist in einem Bereich gewählt, daß sich eine Calciumreaktivität einstellt, die zur Folge hat, daß das Pektin mit dem freien Calcium des gesäuerten Milcherzeugnisses derart reagiert, daß sich an Fruchtfasern erinnernde Gelstrukturen ausbilden.

Diese Gelstrukturen sind beim Verzehr des jeweiligen Milchproduktes insbesondere auch sensorisch von dem gesäuerten Milcherzeugnis deutlich unterscheidbar.

Die hierfür besonders geeignete Calciumreaktivität läßt sich über den Veresterungsgrad und gegebenenfalls den Amidierungsgrad des verwendeten Pektins einstellen, wobei auch eine hierdurch einmal vorgegebene Calciumreaktivität durch Zusatz von Calciumsalzen und Natrium- und/oder Kaliumsalzen noch ausgeglichen bzw. fein abgestimmt werden kann. Die Pektinzubereitung wird als Halbfabrikat in einer wäßrigen Lösung hergestellt.

## Beschreibung

### Gebiet der Erfindung

Die Erfindung betrifft ein Milchprodukt, hergestellt durch eine Mischung eines niederveresterten Pektins mit einem gesäuerten Milcherzeugnis, sowie eine Pektinzubereitung als Halbfabrikat zur Herstellung eines derartigen Milchprodukts.

### Stand der Technik

Ein solches Milchprodukt ist aus der US-4,430,349 bekannt. Die funktionelle Rolle des niederveresterten Pektins (low methoxyl pectin) ist hier beschrieben (z.B. Spalte 2, Zeile 66 bis Spalte 3, Zeile 8), wo darauf hingewiesen wird, daß niederverestertes Pektin als Gelierungsmittel eingesetzt wird, wobei zur Regulierung der Reaktionsrate ein Calcium-Sequestierungsmittel/Maskierungsmittel eingesetzt werden muß, um die hohe Reaktivität von niederveresterten Pektinen mit den in der Milch vorhandenen Calciumionen zu steuern, die gegebenenfalls ohne solche Zusätze die sofortige Koagulation des Milchproduktes in einen "körnigen Pudding" (granular pudding) zur Folge hätte. Um dies zu vermeiden ist vorgesehen, daß ein Alkalisalz zusammen mit dem Pektin eingesetzt wird, das die Calciumionen in der Milch binden soll und über den pH-Wert die Reaktion weniger heftiger ausfallen lassen soll, wodurch die Gelierung bis nach der Homogenisierung des Joghurts verzögert werden kann. Als geeignet hierfür wird beispielsweise Natrium-Hexametaphosphat angegeben.

Bevorzugte Beispiele werden angegeben (Spalte 4, Zeilen 22-27), um durch eine geeignete Mischung von niederverestertem Pektin, Natrium-Hexametaphosphat und Natrium-Citrat eine im Rahmen der Aufgabenstellung dieses Patents "optimale Gelierungsrate" zu erreichen.

Falls ein Fruchtgeschmack des sich ergebenden Milchproduktes gewünscht wird, so wird dies beim Gegenstand dieses Patentes durch Zugabe einer pasteurisierten Erdbeer-Fruchtzubereitung auf den Boden des Joghurtbechers erreicht mit nachfolgender Zugabe des homogenisierten Joghurts. Bei Vermischung bleibt die gleichmäßig cremige Konsistenz des Joghurts erhalten und er wird von der Fruchtzubereitung eingefärbt.

Eine vergleichbare technische Lehre enthalten die beiden einander entsprechenden Druckschriften DE 666685 und OE 141511, die zwar auf Pektine oder Pektinerzeugnisse im Zusammenhang mit einer Milchspeise hinweisen, dieses derart erzeugte Milchprodukt soll jedoch "schnittfähig wie z.B. Quittenkäse" sein und einen "angenehmen aprikosenartigen Geschmack" aufweisen, von Fruchtbestandteilen oder Fruchtimitationen ist hier nicht die Rede. Auch hier beschränkt sich die Rolle der Pektinbestandteile auf ihre Mitwirkung bei der homogenen, gleichmäßigen Gelierung des gesamten Endproduktes.

Die JP-A 260027347 beschreibt die Herstellung von kugelförmigen Fruchtgelen ohne die Verwendung eines Milcherzeugnisses durch tropfenweise Zugabe einer Natriumalginat, niederverestertes Pektin und Fruchtsaft enthaltenen Lösung zu einer Calciumsalz und Fruchtsaft enthaltenden Lösung. Die Zugabe des Calciumsalzes bzw. einer eine Calciumionen enthaltenden wässrigen Lösung nutzt die Reaktivität von niederveresterten Pektinen gegenüber Calcium aus, und damit die grundsätzliche Möglichkeit, durch Zusätze von Calciumionen Art und Geschwindigkeit dieser Reaktion zu beeinflussen, wie dies auch bei den oben aufgeführten Beispielen der Fall ist.

Die GB-A 1328263 beschreibt ein Milchprodukt aus einem gesäuerten Milcherzeugnis (Joghurt) mit nachgebildeten Fruchtstücken, wobei letztere dadurch zustandekommen, daß Tropfen von Fruchtpulpe von Zusätzen von Calciumalginat umhüllt werden. Dadurch soll es möglich sein Texturen zu erzeugen, die an Fruchtstückchen von Erdbeeren oder Pfirsich erinnern. Tropfen von Fruchtpulpe mit einem gelösten Alginat werden zu diesem Zweck in Milch mit darin gelösten Calciumionen eingegeben, so daß sich an der Übergangsfläche zwischen der Fruchtpulpe und der Milch Calciumalginat bildet. Für dieses Verfahren ist die Zugabe von Calciumionen nicht notwendigerweise erforderlich, da die in der Milch vorhandenen Calciumionen ausreichen sollen, notwendigerweise ist jedoch die Zugabe von Fruchtpulpe erforderlich; die Verwendung von Pektinen oder Pektinverbindungen ist in dieser Druckschrift nicht erwähnt.

Zusammenfassend läßt sich daher feststellen, daß der erläuterte Stand der Technik die Herstellung von Milchprodukten aus gesäuerten Milcherzeugnissen beschreibt, wobei auch Pektine und Pektinverindungen wegen ihrer Reaktivität gegenüber den Calciumionen des Milcherzeugnisses eine Rolle spielen, die in der Regel zu einer homogenen Gelierung des Milchproduktes ohne eine bestimmte Struktur führt.

Konventioneller Fruchtjoghurt kann unter anderem stückige Fruchtzusätze beinhalten, die dem Verbraucher neben der hauptsächlich beabsichtigten Geschmacksempfindung auch ein gewisses zugehöriges sensorisches Empfinden vermitteln.

### Beschreibung der Erfindung

Aufgabe der Erfindung ist, ein gattungsgemäßes Milchprodukt so zu konzipieren, daß auf einfache Weise und ohne Zugabe von natürlichen Fruchtbestandteilen der sensorische Eindruck von faserigen Strukturen erreicht wird, die einen solchen Biß aufweisen, daß sie sich deutlich vom gesäuerten Milcherzeugnis unterscheiden.

Erfindungsgemäß wird diese Aufgabe gemäß dem kennzeichnenden Teil des Patentanspruchs 1 gelöst.

Die Grunderkenntnis der Erfindung besteht also darin, daß beim Einsatz von bestimmten niederveresterten Pektinen mit einer definierten Calciumreaktivität innerhalb einer bestimmten Bandbreite sich an Fruchtfasern erinnernde Gelstrukturen ausbilden, wobei zusätzliche Calciumzugaben nicht notwendigerweise erfolgen müssen.

Gemäß einer bevorzugten Ausgestaltung beträgt der Veresterungsgrad des Pektins weniger als 40%.

Ein Pektin mit einem derartigen Veresterungsgrad kann hierbei gezielt durch saure Entesterung hergestellt werden, so daß es mit dem gesäuerten Milcherzeugnis zusammen die gewünschten faserigen bzw. stückigen Strukturen bildet.

Bei einem amidierten Pektin liegt der Veresterungsgrad VE vorzugsweise zwischen 26% und 36% und der Amidierungsgrad A zwischen 15% und 25%. Ein Pektin mit einem derartigen Veresterungs- und Amidierungsgrad kann gezielt durch Entesterung mit Ammoniak hergestellt werden.

Liegen die Veresterungs- bzw. Amidierungsgrade der Pektine außerhalb der genannten Bereiche, sind die Pektine entweder zu wenig calciumreaktiv und es wird keine Faserbildung erreicht, oder es kommt bei zu calciumreaktiven Pektinen zu einer Überreaktion und zu einer sandigen Struktur durch Calciumpektinatbildung.

Es ist jedoch grundsätzlich möglich, über Zusätze von Calciumsalzen bzw. Natrium- und/oder Kaliumsalze die vom Veresterungs- bzw. Amidierungsgrad vorgegebene Calciumreaktivität der Pektine noch zu erhöhen oder abzuschwächen oder unterschiedliche Calciumreaktivitäten durch den Zusatz von Calciumsalzen und Natrium- und/oder Kaliumsalzen auszugleichen. Als Calciumsalze können z.B. Calciumchlorid, tri-Calcium-di-citrat, Calciumlaktat, tri-Calciumorthophosphat oder di-Calciumhydrogenphosphat eingesetzt werden, als Natrium- bzw. Kaliumsalze kann z.B. tri-Natriumcitrat, Natriumlaktat, Natrium-tripolyphosphat, tetra-Natrium-di-phosphat oder tri-Kaliumcitrat Verwendung finden.

Bei dem gesäuerten Milcherzeugnis zur Herstellung des texturierten Milchproduktes kann es sich beispielsweise um Joghurt, Sauermilch, Buttermilch, Kefir, gesäuerte Molke oder direkt gesäuerte Neutralmilch handeln.

Die Erfindung ermöglicht sowohl die industrielle Herstellung derartiger Milchprodukte, beispielsweise Joghurt, mit den gewünschten Strukturen, als auch die industrielle Herstellung eines aus einer Pektinzubereitung mit einem geeigneten Pektin hergestellten Halbfabrikates, das dann individuell (z.B. im Haushalt) mit dem gewünschten Milcherzeugnis versetzt werden kann, um zum Milchprodukt als Endprodukt zu gelangen.

Zweckmäßigerweise wird hierbei das Pektin als wässrige Lösung hergestellt.

Während die Ausbildung von an Fruchtfasern erinnernden Strukturen im gesäuerten Milchprodukt durch die erfindungsgemäße Festlegung und Auswahl von Pektinen mit vorgegebenen Veresterungs- bzw. Amidierungsgraden grundsätzlich gegeben ist, können Form, Festigkeit und geometrische Struktur der fruchtfaser-ähnlichen Strukturen über verschiedene Parameter im einzelnen definiert werden, wie z.B. die Pektinkonzentration in der Pektinzubereitung, deren pH-Wert, deren Zuckergehalt, Zuckergehalt und Temperatur des Milcherzeugnisses und Temperatur der Pektinzubereitung, sowie über Verfahrensparameter bei der Herstellung wie z.B. die Rührgeschwindigkeit.

Der Pektinzubereitung als Halbfabrikat, insbesondere als Pektinlösung, können in üblicher Weise auch Farb- und Aromastoffe zugefügt werden, wobei hier die entstehenden Fasern diese Stoffe mit einschließen und ein Milchprodukt entsteht, das aus einem wenig gefärbten gesäuerten Milcherzeugnis wie z.B. Joghurt mit intensiv eingefärbten Fasern entsteht.

In ähnlicher Weise können der Pektinzubereitung auch Fruchtanteile wie Fruchtsaft, Fruchtsaftkonzentrat, Pulpe, Fruchtzubereitungen oder Gemüseanteile in entsprechender Form zugemischt werden.

Zur Einstellung oder Abpufferung des pH-Wertes der Pektinzubereitung auf einen Bereich von bevorzugt 4,0 bis 6,0 können lebensmittelrechtlich zugelassene Säuren und/oder deren Alkalisalze, bevorzugt Citronensäure und/oder Natriumcitrat/Kaliumcitrat eingesetzt werden.

Die erfindungsgemäß erzeugten Fruchtfasern bleiben beim Pasteurisieren stabil und geben kaum Farbe an das Milcherzeugnis z.B. den Joghurt ab. Daher können die erfindungsgemäßen texturierten Milchprodukte nicht nur über Pektinzubereitungen als Halbfabrikat für die erwähnte Herstellung im Haushalt und dort ohne Erhitzung für den sofortigen Verzehr hergestellt werden, sondern auch in der Industrie zur Vermarktung als pasteurisiertes Fertigprodukt. Die Vermarktung mit lebenden Kulturen im Kühlregal ist ebenfalls möglich.

### Bevorzugte Ausführungsbeispiele

Nachfolgend werden Beispiele (1) bis (5) zur Herstellung der erfindungsgemäßen Pektinzubereitung als Halbfabrikat angegeben, die zusammen mit einem gesäuerten Milcherzeugnis Milchprodukte mit den gewünschten faserigen Strukturen ergeben.

Ein weiteres Beispiel (6) geht von der Verwendung von Joghurt als gesäuertes Milcherzeugnis aus und beschreibt den Einfluß der verschiedenen Pektinzubereitungen auf die Struktur der fruchtähnlichen Fasern.

Weitere Beispiele (7) und (8) zeigen den Einfluß der Verarbeitungsweise auf die fruchtfaser-ähnlichen Strukturen, und weitere Beispiele (9 bis 11) betreffen industrielle Herstellungsmöglichkeiten von erfindungsgemäßen Halbfabrikaten.

Die bei den Beispielen 1 bis 4 angegebene Calciumreaktivität in Maßeinheiten "HPE" beruht auf der Bestimmung der Bruchfestigkeit eines unter Verwendung des jeweiligen Pektins unter Standardbedingungen hergestellten Gels, wie dies in Anlage 1 und Anlage 2 im einzelnen erläutert ist; zur Messung der Bruchfestigkeit wird ein handelsübliches Gerät (Herbstreith Pektinometer) eingesetzt, an dem die in HPE gemessene Bruchfestigkeit abgelesen wird. Die Funktionsweise dieses Geräts ist beispielsweise beschrieben in "Die industrielle Obst- und Gemüseverwertung", 1983, S.523-527, C. Zedler: Die Gelierkraftbestimmung von Pektinen mit dem Herbstreith-Pektinometer.
1. Herstellung der Pektinzubereitung als Halbfabrikat (1. Beispiel)
   In 1 kg heißes Wasser werden 25g amidiertes Pektin mit einem Veresterungsgrad von 27% und einem Amidierungsgrad von 22% und einer Calciumreaktivität von 1500 HPE (entsprechend Methode 2), 80 g Stärke, 200 g Saccharose, 1,5 g tri-Natriumcitrat und 1,5 g tri-Kaliumcitrat gelöst. Die Lösung wird abgekühlt und mit 30 g Erdbeersaftkonzentrat versetzt.
2. Herstellung der Pektinzubereitung als Halbfabrikat (2. Beispiel)
   In 1 kg heißes Wasser werden unter Rühren 27 g amidiertes Pektin mit einem Veresterungsgrad von 26-30% und einem Amidierungsgrad von 19-22% und einer Calciumreaktivität von 1200-2000 HPE (entsprechend Methode 2), 210 g Saccharose, 1,5 g tri-Natriumcitrat, 1,5 g tri-Kaliumcitrat, 1,4 g Calciumlaktat und 0,45 g tetra-Natriumpyrophosphat gelöst. Danach werden 3 ml Himbeeraroma und 10 Tropfen Farbstoff (z.B. Erdbeerrot) zugesetzt.
3. Herstellung der Pektinzubereitung als Halbfabrikat (3. Beispiel)
   In 1 kg heißes Wasser werden 25 g niederverestertes Pektin mit einem Veresterungsgrad von 38% und einer Calciumreaktivität von 770 HPE (entsprechend Methode 1) mit 200 g Saccharose gelöst. Der pH-Wert wird nach dem Abkühlen auf 4,0 eingestellt.
4. Herstellung der Pektinzubereitung als Halbfabrikat (4. Beispiel)
   In 1 kg heißes Wasser werden 27 g niederverestertes Pektin mit einem Veresterungsgrad von 36-40% und einer Calciumreaktivität von 600-1000 HPE (entsprechend Methode 1), 3 g tri-Kaliumcitrat, 1,5 g Calciumlaktat, 0,5 g tetra-Natriumpyrophosphat, 80 g Stärke und 200 g Saccharose gelöst. Die Lösung wird abgekühlt und mit 30 g Fruchtsaftkonzentrat versetzt.
5. Herstellung der Pektinzubereitung als Halbfabrikat (5. Beispiel)
   In 1kg heißes Wasser werden 40 g Pektin "Amid CM 015-A" und 200 g Zucker gelöst. Danach werden Aroma und Farbstoff zugesetzt. Bei Verwendung von "Amid CM 015-A" des Anmelders entfällt die Zugabe von Calciumsalzen und Natrium- bzw. Kaliumsalzen, da es sich bei "Amid CM 015-A" um ein standardisiertes Pektin handelt, dessen Calciumreaktivität den hier gewünschten Wert aufweist.
6. Herstellung des gesäuerten texturierten Milchproduktes
   In einer Schüssel werden 400 g Joghurt (0,3% Fett) aus dem Kühlschrank (mit ca. 10°C) mit 60g Zucker gemischt vorgelegt und mit 200 g einer der Lösungen aus Beispiel 1 - 5 mit einer Temperatur von 30°C mit einem Schneebesen verrührt. Dabei bilden sich umgehend an Fruchtfasern erinnernde Strukturen aus. Dieses texturierte gesäuerte Milchprodukt wird ca. 1 Stunde im Kühlschrank kaltgestellt.
   Die Strukturen der Fasern der Beispiele unterscheiden sich deutlich: Die Lösungen aus den Beispielen 3 und 4 ergeben Fasern mit festem Biß, wogegen mit den Lösungen aus den Beispielen 1,2 und 5 weichere Fasern gebildet werden.
7. Werden Pektinlösungen und Joghurt aus den Beispielen 1 - 5 bei 15°C mit einem Kochlöffel und unter langsamem Rühren vermischt, bilden sich grobe an Fruchtstücke erinnernde Strukturen.
8. Werden Pektinlösungen und Joghurt aus den Beispielen 1 - 5 bei 30°C mit einem Schneebesen vermischt, bilden sich wesentlich feinere, sehr weiche an sehr feine Fruchtfasern erinnernde Strukturen.
8. Das Halbfabrikat aus Beispiel 1 wird in 1000fach größerem Ansatz (1000 l) hergestellt. Die Zugabe von Erdbeersaftkonzentrat und die pH-Einstellung erfolgen im heißen Zustand bei ca. 60 bis 70°C. Das Halbfabrikat wird pasteurisiert und in Portionspackungen aseptisch abgefüllt oder nach Abfüllung in die Packungen pasteurisiert und gekühlt.
10. Das Halbfabrikat aus Beispiel 9 wird in 20fach größerem Ansatz (20 m³) hergestellt und aseptisch in größere Gebinde, z.B. Container, abgefüllt.
11. In einem Rührbehälter werden 10 000 Liter gerührter Joghurt mit 20°C vorgelegt und unter Rühren mit 5 000 Liter des Halbfabrikates aus Beispiel 10 vermischt und ca. 1 Stunde nach Beendung des Rührvorgangs in einer Anlage zur Hochkurzzeiterhitzung erhitzt und in die Verkaufsverpackungen steril abgefüllt.

### Anlage 1

### Methode 1

### Durchführung:

| | |
|---|---|
| Rezeptur: | 320,0 g Pufferlösung pH 2,0 |
| | 60,0 g Zucker |
| | 3,12 g Pektin |
| | 16,0 ml Calciumchloridlösung-dihydrat (50g/l) |
| Einwaage: | ca. 399 g |
| Auswaage: | 380 g +/- 1 |
| Abfülltemperatur: | ca. 90° C |

### Herstellung:

- A:: Pektin und die gesamte Zuckermenge trocken mischen.
- B:: Unter Rühren in die Pufferlösung einstreuen.
- C:: Kochen, bis das Pektin vollständig gelöst ist.
- D:: Dosieren der Calciumchloridlösung.
- E:: Auf Auswaage auskochen.
- F:: Je 90 g in drei Lüersbecher mit eingesetzter Zerreißfigur sofort (Abfülltemperatur ca. 90° C) einwägen und im Wasserbad auf 20°C temperieren.
- G;: Nach 2 h wird die Bruchfestigkeit mit dem Herbstreith-Pektinometer Mark III gemessen.
Die Bruchfestigkeit wird in Herbstreith-Pektinometer-Einheiten (HPE) angegeben.

- Pufferlösung:: 0,3 mol K-acetat/Milchsre. Puffer
42,0 g K-acetat
217,0 g Milchsre (90 %) auf
4000 ml auffüllen.
pH-Wert (20° C): 3,0 +/- 0,05

### Anlage 2

### Methode 2

### Durchführung:

| | |
|---|---|
| Rezeptur: | 3,0 g Pektin |
| | 2,1 g Puffermischung |
| | 130,0 g Saccharose |
| | 230,0 g Pufferlösung pH 3,2 (Herstellung siehe unten) |
| Einwaage: | ca. 365 g |
| Auswaage: | 335 g |
| TS: | ca. 39 % |
| pH: | 3,2 |

### Herstellung:

- A:: Pufferlösung in Kasserole (⌀ oben 15 cm, unten 11,5 cm) vorlegen.
- B:: Gelierkonzentrat mit der Gesamtzuckermenge mischen.
- C:: Mischung B in die Pufferlösung einrühren und kochen, bis das Pektin vollständig gelöst ist.
- D:: Auf Auswaage (335 g) auskochen und je 100 g in 3 Lüersbecher mit eingesetzter Zerreißfigur abfüllen.
- E:: Nach 2 h Lagerung bei 20°C im Wasserbad Bruchfestigkeit mit dem Herbstreith-Pektinometer bestimmen. Die Bruchfestigkeit wird in Herbstreith-Pektinometer-Einheiten (HPE) angegeben.

| | |
|---|---|
| Zusammensetzung d. Puffermischung: | 1,585 g Citronensäure-Anhydrat (E 330 = interne Nr. 8) |
| | 0,270 g tri-Kaliumcitrat fein (E 332 = interne Nr. 9) |
| | 0.245 g Kaliumsorbat, hydrophobiert (von P+L in F+E) |
| | 2.1 g Puffermischung |

| | |
|---|---|
| Herstellung der Pufferlösung: | 50,0 g Citronensäure-Anhydrat reinst (Fa. Merck) |
| | 2,8 g CaCl₂ + 2H₂O reinst (Fa. Merck) |
| | 4,8 l Wasser entionisiert |

- Citronensäure und CaCl₂ + 2H₂O in Wasser lösen
- Lösung mit Natriumacetat auf pH 3,2 einstellen
- Lösung auf 5 Liter auffüllen

## Patentansprüche

1. Milchprodukt, hergestellt durch eine Mischung eines niederveresterten Pektins mit einem gesäuerten Milcherzeugnis,
dadurch gekennzeichnet, daß über den Veresterungsgrad ein Pektin mit einer Calciumreaktivität ausgewählt wird, das mit dem freien Calcium des gesäuerten Milcherzeugnisses an Fruchtfasern erinnernde Gelstrukturen ausbildet.

2. Milchprodukt nach Anspruch 1, dadurch gekennzeichnet, daß der Veresterungsgrad des niederveresterten Pektins kleiner als 40% ist.

3. Milchprodukt nach Anspruch 1, dadurch gekennzeichnet, daß das Pektin ein amidiertes Pektin ist.

4. Milchprodukt nach Anspruch 3, dadurch gekennzeichnet, daß der Veresterungsgrad (VE) 26-36% und der Amidierungsgrad (A) 15-25% beträgt.

5. Milchprodukt nach Anspruch 2 oder 4, gekennzeichnet durch Zusätze mindestens eines Salzes (z.B. Calcium-, Natrium- oder Kaliumsalz) zur weiteren Regulierung der Calciumreaktivität des Pektins.

6. Pektinzubereitung als Halbfabrikat zur Herstellung eines Milchproduktes nach Anspruch 1, gekennzeichnet durch eine wäßrige Lösung mit einem niederveresterten Pektin.

7. Pektinzubereitung als Halbfabrikat zur Herstellung eines Milchproduktes nach Anspruch 1, dadurch gekennzeichnet, daß sie mindestens eine zusätzliche Komponente aufweist.

8. Pektinzubereitung als Halbfabrikat nach Anspruch 6 oder 7, dadurch gekennzeichnet, daß ihr pH-Wert mit Säuren und/oder mit deren Alkali- oder Erdalkalisalzen im Bereich von 2,5 bis 6,5, vorzugsweise im Bereich von 4,0 bis 5,5 eingestellt bzw. gepuffert wird.

9. Pektinzubereitung nach einem der Ansprüche 6-8, dadurch gekennzeichnet, daß die zusätzliche Komponente mindestens ein Farbstoff, Mineralstoff, Spurenelement, Zuckerart, Zuckeraustauschstoff, Süßstoff, Süßungsmittel aus Früchten unterschiedlicher Verarbeitungsstufen, ein Hydrokolloid wie z.B. Gellan, Guar, Johannisbrotkernmehl, Protein, Stärke, Xanthan ist, die einzeln oder in Kombination zugesetzt werden.

10. Pektinzubereitung als Halbfabrikat nach einem der Ansprüche 6-9, dadurch gekennzeichnet, daß sie mit Fruchtanteilen aus Fruchtsaft, Fruchtsaftkonzentrat, Pulpe oder Fruchtzubereitungen oder entsprechenden Gemüseanteilen vermischt wird.

11. Milchprodukt nach Anspruch 9 oder 10, dadurch gekennzeichnet, daß das Halbfabrikat oder das Milcherzeugnis vor dem Vermischen mit zumindest einer der zusätzlichen Komponenten versetzt wird.
